# EUROPEAN PATENT SPECIFICATION

(11) **EP 0 674 834 B1**
(45) Date of publication and mention of the grant of the patent: **13.03.2002**
(21) Application number: 95104954.3
(22) Date of filing: 03.04.1995
(51) Int. Cl.: A21D 13/00, A21D 2/18, A21D 8/02, A21D 6/00

(54) **Pretzel and method for preparation of the same**
Brezel und Verfahren zu deren Herstellung
Bretzel et méthode pour sa préparation

(30) Priority: 01.04.1994 JP 6514394
(43) Date of publication of application: 04.10.1995
(73) Proprietor: LOTTE CO., LTD, Shinjuku-ku Tokyo (JP)
(72) Inventor: Takemori, Toshio, Tokyo (JP); Tsurumi, Toshinobu, Saitama (JP); Takagi, Masahiro, Minami Saitama-gun Saitama (JP); Terasaki, Shunichi, Urawa-shi Saitama (JP)
(74) Representative: Splanemann Reitzner Baronetzky Westendorp Patentanwälte

(56) References cited:
- US-A- 3 763 765
- US-A- 4 241 649
- US-A- 4 283 430
- US-A- 4 759 939
- US-A- 5 185 167

## Description

The invention relates to a stick type pretzel and a process for preparation of the same.

In the prior art, traditional pretzels have been prepared by cutting a bread material into slender parts which are subsequently formed in various shapes, for example, ring shape, 8-shape, B-shape or the like, and baking those slender parts of the material. Various types of pretzels have been known in the art, both made from materials containing yeast or expanding agents, and mass production of such pretzels has been realized.

US-A-4 759 939 discloses a contiuous production of C-shaped pretzels by extrusion of a dry mixture comprising 70 to about 85% flour, 9 to about 15% corn syrup solids, 0.5 to 15% of salt and 1.0 to 4.0% of edible oil. This document is silent as to the use of starch. Furthermore, the composition of the material is different from that of the present invention at least with respect to oil and fat content. Furthermore, when extruded by an extruder ring nozzle the material will result in a product having cracks.

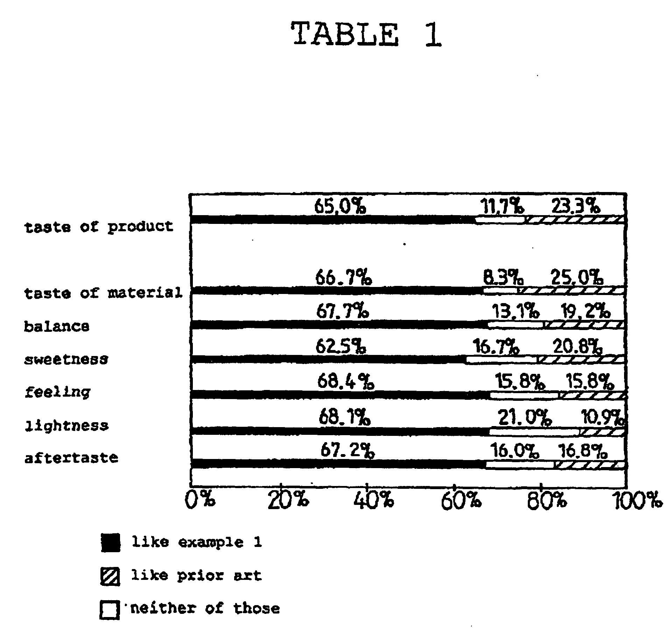

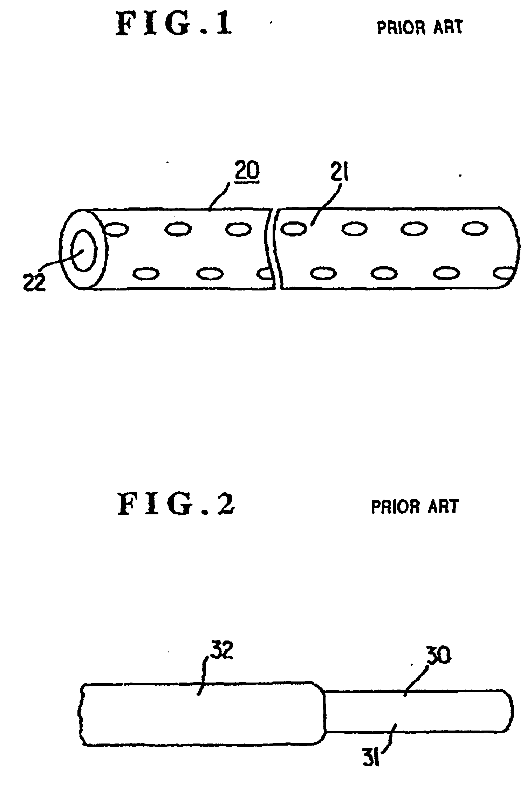

In the production of the non-fermentation stick type pretzel, the following processes for providing an unique flavor to the pretzel have been known in the art. For preparation of a stick type pretzel, an extruder is used to extrude the stick type pretzel. The extruder has double cylindrical structure wherein two cylinders or outer and inner cylinders are placed on a coaxial position so that the pretzel material 21 is extruded through between the outer and inner cylinders while a center material 22 providing a flavor to the pretzel is extruded through within the inner cylinder for baking those materials to prepare complex type pretzel 20 having the double cylindrical structure as illustrated in FIG. 1. This type of the pretzel is however, engaged with disadvantages in changing taste and feeling due to the baking of the outer pretzel material 21 together with the center material 22.

Moreover, another type of the stick pretzel was proposed as illustrated in FIG. 2 in which a pretzel 31 is coated by chocolate 32. This type of the pretzel is, has also the disadvantage in having the chocolate 32 contact with a hand of a person who hands the pretzel, or at high temperature the chocolate melts even if a solid outer coating material is selected. This provides displeasure to the consumers.

Accordingly, it is an object of the present invention to provide a stick type pretzel free from any disadvantages as described above.

It is another object of the present invention to provide a novel process for preparation of a stick type pretzel free from any disadvantages as described above.

The present invention provides a stick type pretzel having a cylindrical shape defining a hollow portion along a longitudinal center of said pretzel, wherein said pretzel is prepared by extruding a material which consists essentially of 100 parts by weight of grain flour, 5-30 parts by weight of saccharides, 10 - 30 parts by weight of oils and fats and 20-50 parts by weight of starch, and baking said material and that said cylindrical shape has an inner diameter of 40% or more of the outer diameter. It is preferable that the saccharide content is in the range from 10 to 20 parts by weight, the oil and fat content is in the range from 15 to 25 parts by weight and the starch content is in the range from 30 to 45 parts by weight. It is also preferable that the baked material of the pretzel has an outer diameter of 15 millimeters or less, more preferable of 10 millimeters or less. It is preferable preferable that the hollow portion of the pretzel is filled with a tasting material for providing a predetermined taste to the pretzel. It is furthermore preferable that the tasting material is limited within opposite opening portions of the hollow portion of the baked material of the pretzel or opposite ends of the tasting material within the hollow portion of the pretzel have a concave shape.

The present invention provides a process of preparing a stick type pretzel, wherein said said method comprises the steps of preparing a material which consists essentially of 100 parts by weight of grain flour, 5-30 parts by weight of saccharides, 10-30 parts by weight of oils and fats and 20-50 parts by weight of starch, extruding the material by use of ring nozzle having an inner diameter of 50% or more of the outer diameter so that said extruded material has a cylindrical shape with a hollow portion along a longitudinal center of the stick type pretzel, baking said extruded material, cutting said baked material and injecting a tasting material with an adjusted viscosity into said hollow portion. It is preferable that the saccharide content is in the range from 10 to 20 parts by weight, the oil and fat content is in the range from 15 to 25 parts by weight and the starch content is in the range from 30 to 45 parts by weight. It is also preferable that the ring nozzle has an outer diameter of 18 millimeters or less, more preferable within 11 millimeters. It is also preferable that prior to the baking process, the extruded material is subjected to a treatment with an alkaline liquid.

Preferred embodiments of the invention will be described in detail with reference to the accompanying drawings.
FIG. 1 is a perspective view illustrative of the conventional stick type pretzel.
FIG. 2 is a perspective view illustrative of the another conventional stick type pretzel.
FIG. 3 is a perspective view with a partial sectioned view illustrative of a novel stick type pretzel according to the present invention.
FIG. 4 is a cross sectional elevation view illustrative of a novel stick type pretzel according to the present invention.

The present invention was conceived on the bases of the following viewpoints. The inventors have drawn their attentions to the fact that the baking of the pretzel material together with the tasting material leads to the disadvantage as described above. In consideration of this fact, the inventors conceived the separate preparation of the baked material for the pretzel and the tasting material to be thereafter introduced into the hollow portion of the baked material.

If no starch is used, it is difficult to prepare a cylindrical and stick type pretzel with a hollow portion along a longitudinal center of the stick type pretzel. Such material has a sufficient hardness to make it difficult to extrude the material by use of a ring type extruder nozzle. Even if extruded, the material is damaged due to a load generated during the extrusion. If the water content is increased to reduce the hardness thereof, then another problem, i.e a deformation of the extruded material may result thereby making it difficult to bake the material with a predetermined desired shape.

In extruding the material by use of the ring nozzle of the extruder, it is preferable that the material has a controlled hardness and is extendable, but after baking the material is required to have a sufficient hardness to keep the cylindrical shape thereof. The above conventional material could not satisfy those requirements.

It was conceived by the inventors that a mixture of the grain flour with saccharides and oils and fats at predetermined ratios allows a preparation of the desired cylindrical pretzel with the hollow portion along the longitudinal center of the pretzel.

It was further conceived by the inventors that the use of the starch in combination with the adjusted amounts of the saccharides and the oils and fats facilitates an extrusion by use of an extruder ring nozzle having a small difference between inner and outer diameters to thereby allow the preparation of the pretzel having a small difference between the inner and outer diameters.

According to the present invention the grain flour may be wheat flour, barley flour, rye flour, oats flour, corn flour and the like. it is also preferable to use the wheat flour in consideration of the hardness and gluten content so that weak flour contains not more than 50% thereof.

Also available saccharides may be sugar, maltose, lactose, glucose, fructose, invert sugar, starch sugar, isomer sugar, and the like. It is preferable to use those saccharides in an amount of 5-30 parts by weight, preferably 10-20 parts by weight, per 100 parts by weight of grain flour.

Also available oils and fats may be butter, shortening, margarine, liquid oil, solid oil and the like. For 100 parts by weight of grain flour 10-30 parts by weight, preferably 15-25 parts by weight thereof are used.

Available starch may be corn starch, potato starch, wheat starch as well as alpharized, roasted or hydrolyzed starch or other modified starch. For 100 parts by weight of the grain flour 20-50 parts by weight of the starch, preferably 30-45 parts by weight, are used.

Furthermore, auxiliaries, such as daily dairy products, eggs, essences, synthetic seasonings, expanding agents and the like, may be used.

A suitable amount of water is added and mixed to the material as described above. The material is subjected to a continuous extrusion by use of ring nozzle extruder to form a cylindrically shaped extruded material with a hollow portion along the longitudinal direction of the material. when filling the tasting material into the hollow part of the baked pretzel material, the inner diameter of the pretzel is 40% or more of the outer diameter thereof. The diameter of the pretzel may be 15 millimeters or less, preferably 10 millimeters. The outer diameter of the ring nozzle may be 18 millimeters or less, preferably 11 millimeters or less.

The extruded material may be subjected to a treatment using an alkaline liquid by continuous passing through an alkaline bath. Of course this alkaline treatment according to the present invention may be omitted.

Such treatment with an alkaline liquid makes the pretzel more crispy and reduces adhesion of the material to a belt used in the process for producing the pretzel. The treatment has to be carried out with an attention to prevent any deformation of the pretzel due to change in water content. It is also required to prevent the material of the pretzel to float on the alkaline liquid in the bath. Available alkaline liquid may be a sodium hydroxide or sodium carbonate solution and the like.

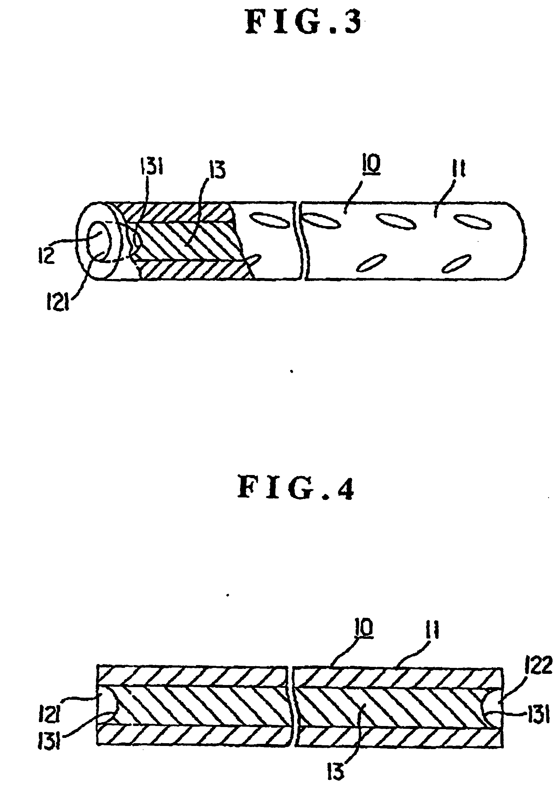

The extruded material is introduced into an oven for baking the same to obtain a cylindrically shaped baked material 11 with an outer diameter of 15 millimeters or less, preferably 10 millimeters or less and an inner diameter of 40% of the outer diameter as illustrated in FIG. 3.

The baked material 11 is then cut to a desired length for subsequent filling a tasting material 13 into the hollow portion 12 of the baked material 11. The tasting material 13 may be cream, chocolate, mayonnaise, jam, butter, curry and the like.

For filling the tasting material 13, the cut baked material 11 is positioned vertically so that from an upper opening 121 of the hollow portion thereof the tasting material is introduced into the hollow portion, the tasting material having an adjusted viscosity to allow the injection to reach the opposite bottom opening 122 of the hollow portion.

When selecting cream, mayonnaise and jam, no further process is required, but if another tasting material is selected then the pretzel must be left for a time to subsequently cool and dry the same to solidify the tasting material. As a result, the tasting material remains inside the opposite openings 121 and 122 and the opposite ends 131 and 132 of the tasting material are concave to thereby prepare the pretzel as illustrated in FIG. 4.

The amounts of the oils and fats and saccharides are determined to adjust the desired softness and flexibility for extrusion. The use of the starch may prevent the material from being damaged by the extruder.
The use of saccharide and starch in the predetermined ratios improves viscosity and solidity of the material of the pretzel.

### EXAMPLE 1 :

60 parts by weight by strength wheat flour, 40 parts by weight of weak wheat flower, 20 parts by weight of sugar, 25 parts by weight of shortening, 40 parts by weight of wheat starch, 5 parts by weight of skim milk, 1.5 parts by weight of salt, 1 part by weight of sodium bicarbonate and 60 parts by weight of water were mixed and stirred to prepare the material for the pretzel.

The material was extruded by an extruder provided with a ring nozzle having an outer diameter of 6 millimeters and an inner diameter of 4 millimeters to thereby form a cylindrically shaped extruded material with a hollow portion along the longitudinal direction. The extruded material was continuously immersed into a liquid containing 0.7% of sodium hydroxide at a temperature of 95°C in an alkaline bath and thereafter baked in a mesh oven to produce the baked material for pretzel having an outer diameter of 5 millimeters and an inner diameter of 2.5 millimeters.

The baked material was then cut to a length of 120 millimeters to be positioned in a vertical direction so that, from an upper opening of the hollow portion of the baked material, a molten chocolate was injected for subsequent cooling down to solidify the molten chocolate to thereby obtaining a chocolate pretzel. The solid chocolate has opposite ends being concave. The pretzel has the taste of both the material of the pretzel and the chocolate.

### EXAMPLE 2 :

80 parts by weight of strength wheat flour, 10 parts by weight of weak wheat flower, 10 parts by weight of corn flour, 12 parts by weight of starch syrup (25% moisture), 10 parts by weight of sugar, 10 parts by weight of butter, 10 parts by weight of shortening, 30 parts by weight of potato starch and 65 parts by weight of water were mixed and stirred to prepare the material for the pretzel.

The material was extruded by an extruder provided with a ring nozzle having an outer diameter of 8.5 millimeters and an inner diameter of 5.5 millimeters to thereby form a cylindrically shaped extruded material with a hollow portion along the longitudinal direction. The extruded material was thereafter baked in a mesh oven to produce the baked material for pretzel having an outer diameter of 8 millimeters and inner diameter of 5 millimeters.

The baked material was then cut to a length of 50 millimeters to be positioned in a vertical direction so that, from an upper opening of the hollow portion of the baked material, a cheese cream was injected for subsequent cooling down to solidify the cheese cream to thereby obtaining a cheese cream pretzel. The solid cheese cream has opposite ends being concave. The pretzel has the taste of both the material of the pretzel and the cheese cream.

### EXAMPLE 3 :

60 parts by weight of strength wheat flour, 40 parts by weight of weak wheat flower, 12 parts by weight of sugar, 17 parts by weight of shortening, 32 parts by weight of wheat starch, 5 parts by weight of skim milk, 1.5 parts by weight of salt, 1 part by weight of sodium bicarbonate and 60 parts by weight of water were mixed and stirred to prepare the material for the pretzel.

The material was extruded by an extruder provided with a ring nozzle having an outer diameter of 6 millimeters and an inner diameter of 4 millimeters to thereby form a cylindrically shaped extruded material with a hollow portion along the longitudinal direction. The extruded material was continuously immersed into a liquid containing 0.7% of sodium hydroxide at a temperature of 95°C in an alkaline bath and thereafter baked in a mesh oven to produce the baked material for pretzel having an outer diameter of 5 millimeters and inner diameter of 2.5 millimeters.

The baked material was then cut to a length of 120 millimeters to be positioned in a vertical direction so that, from an upper opening of the hollow portion of the baked material, a molten chocolate was injected for subsequent cooling down to solidify the molten chocolate to thereby obtaining a chocolate pretzel. The solid chocolate has opposite ends being concave. The pretzel has the taste of both the material of the pretzel and the chocolate.

### EXAMPLE 4 :

60 parts by weight of strength wheat flour, 40 parts by weight of weak wheat flower, 8 parts by weight of starch syrup (25% moisture), 10 parts by weight of sugar, 10 parts by weight of butter, 9 parts by weight of shortening, 32 parts by weight of wheat starch, 5 parts by weight of skim milk, 1.5 parts by weight of salt, 1 part by weight of sodium bicarbonate and 60 parts by weight of water were mixed and stirred to prepare the material for the pretzel.

The material was extruded by an extruder provided with a ring nozzle having an outer diameter of 8.5 millimeters and an inner diameter of 5.5 millimeters to thereby form a cylindrically shaped extruded material with a hollow portion along the longitudinal direction. The extruded material was thereafter baked in a mesh oven to produce the baked material for pretzel having an outer diameter of 8 millimeters and inner diameter of 5 millimeters.

The baked material was then cut to a length of 50 millimeters to be positioned in a vertical direction so that, from an upper opening of the hollow portion of the baked material, a cheese cream was injected for subsequent cooling down to solidify the cheese cream to thereby obtaining a cheese cream pretzel. The solid pretzel has opposite ends being concave. The pretzel has the taste of both the material of the pretzel and the cheese cream.

### EXAMPLE 5 :

80 parts by weight of strength wheat flour, 10 parts by weight of weak wheat flower, 10 parts by weight of corn flour, 6 parts by weight of sugar, 8 parts by weight of butter, 2 parts by weight of shortening, 28 parts by weight of potato starch, 2 parts by weight of salt, 0.5 part by weight of sodium bicarbonate and 65 parts by weight of water were mixed and stirred to prepare the material for the pretzel.

The material was extruded by an extruder provided with a ring nozzle having an outer diameter of 6 millimeters and an inner diameter of 4 millimeters to thereby form a cylindrically shaped extruded material with a hollow portion along the longitudinal direction. The extruded material was continuously immersed into a liquid containing 0.7% of sodium hydroxide at a temperature of 95°C in an alkaline bath and thereafter baked in a mesh oven to produce the baked material for pretzel having an outer diameter of 5 millimeters and inner diameter of 2.5 millimeters.

The baked material was then cut to a length of 120 millimeters to be positioned in a vertical direction so that, from an upper opening of the hollow portion of the baked material, a molten chocolate was injected for subsequent cooling down to solidify the molten chocolate to thereby obtaining a chocolate pretzel. The solid chocolate has opposite ends being concave. The pretzel has the taste of both the material of the pretzel and the chocolate.

### EXAMPLE 6 :

40 parts by weight of strength wheat flour, 60 parts by weight of weak wheat flower, 18 parts by weight of starch syrup (25% moisture), 15 parts by weight of sugar, 15 parts by weight of butter, 13 parts by weight of shortening, 48 parts by weight of wheat starch, 5 parts by weight of skim milk, 1.5 parts by weight of salt, 1 part by weight of sodium bicarbonate and 60 parts by weight of water were mixed and stirred to prepare the material for the pretzel.

The material was extruded by an extruder provided with a ring nozzle having an outer diameter of 6 millimeters and an inner diameter of 4 millimeters to thereby form a cylindrically shaped extruded material with a hollow portion along the longitudinal direction. The extruded material was continuously immersed into a liquid containing 0.7% of sodium hydroxide at a temperature of 95°C in an alkaline bath and thereafter baked in a mesh oven to produce the baked material for pretzel having an outer diameter of 5 millimeters and inner diameter of 2.5 millimeters.

The baked material was then cut to a length of 120 millimeters to be positioned in a vertical direction so that, from an upper opening of the hollow portion of the baked material, a molten chocolate was injected for subsequent cooling down to solidify the molten chocolate to thereby obtaining a chocolate pretzel. The solid chocolate has opposite ends being concave. The pretzel has the taste of both the material of the pretzel and the chocolate.

### EXAMPLE 7 :

50 parts by weight of strength wheat flour, 50 parts by weight of weak wheat flower, 5 parts by weight of sugar, 8 parts by weight of shortening, 1 part by weight of salt and 55 parts by weight of water were mixed and stirred to prepare the material for the pretzel.

The material was extruded by an extruder provided with a ring nozzle having an outer diameter of 12 millimeters and an inner diameter of 4 millimeters to thereby form a cylindrically shaped extruded material with a hollow portion along the longitudinal direction. The extruded material was continuously immersed into a liquid containing 0.7% of sodium hydroxide at a temperature of 95°C in an alkaline bath and thereafter baked in a mesh oven to produce the baked material for pretzel having an outer diameter of 11 millimeters and inner diameter of 3 millimeters.

The baked material was then cut to a length of 120 millimeters to be positioned in a vertical direction so that, from an upper opening of the hollow portion of the baked material, a molten chocolate was injected for subsequent cooling down to solidify the melt chocolate to thereby obtaining a chocolate pretzel. The solid chocolate has opposite ends being concave. The pretzel has the taste of both the material of the pretzel and the chocolate.

### EXAMPLE 8 :

100 parts by weight of strength wheat flour, 50 parts by weight of sugar, 55 parts by weight of shortening, 50 parts by weight of wheat starch, 5 parts by weight of skim milk, 1.5 parts by weight of salt, 0.5 parts by weight of sodium bicarbonate and 70 parts by weight of water were mixed and stirred to prepare the material for the pretzel.

The material was extruded by an extruder provided with a ring nozzle having an outer diameter of 12 millimeters and an inner diameter of 4 millimeters to thereby form a cylindrically shaped extruded material with a hollow portion along the longitudinal direction. The extruded material was continuously immersed into a liquid containing 0.7% of sodium hydroxide at a temperature of 95°C in an alkaline bath and thereafter baked in a mesh oven to produce the baked material for pretzel having an outer diameter of 11 millimeters and inner diameter of 3 millimeters.

The baked material was then cut to a length of 120 millimeters to be positioned in a vertical direction so that, from an upper opening of the hollow portion of the baked material, a molten chocolate was injected for subsequent cooling down to solidify the molten chocolate to thereby obtaining a chocolate pretzel. The solid chocolate has opposite ends being concave. The pretzel has the taste of both the material of the pretzel and the chocolate.

### COMPARATIVE EXAMPLE :

100 parts by weight of weak wheat flower, 4 parts by weight of shortening, 1 part by weight of salt, 0.3 parts by weight of baking powder and 33 parts by weight of water were mixed with each other and stirred to prepare the material for the pretzel.

The material was extruded by an extruder provided with a ring nozzle having an outer diameter of 6 millimeters and an inner diameter of 4 millimeters, resulting in the formation of cracks. The extruded material with cracks was baked in a mesh oven to cause cracks in the baked material. Injection of the melt chocolate results in leakage of chocolate from the cracks. The resultant pretzel shows a strong crisp and bad taste.

### PANEL TEST :

The novel pretzel of Example 1 according to the present invention and a conventional, commercially available pretzel were subjected to panel tests as to taste by 121 panelists. The results are illustrated in Table 1 from which it may be understood that the novel pretzel according to the present invention received evaluations of better taste than the conventional one. Further more it was found to suitable for eating because no chocolate adhered to the hands of the panelists.

## Claims

1. A pretzel (10) having a cylindrical shape defining a hollow portion (12) along a longitudinal center of said pretzel, **characterized in that** said pretzel (10) is prepared by extruding by use of a ring nozzle a material (11) which consists essentially of 100 parts by weight of grain flour, 5 - 30 parts by weight of saccaride, 10 - 30 parts by weight of oils and fats and 20 - 50 parts by weight of starch, and baking said material, and that said cylindrical shape has an inner diameter of 40% or more of an outer diameter.

2. The pretzel as claimed in claim 1, **characterized in that** said saccaride is in the range of from 10 to 20 parts by weight, said oils and fats are in the range of from 15 to 25 parts by weight and said starch is in the range of from 30 to 45 parts by weight.

3. The pretzel as claimed in any one of the claims 1 - 2, **characterized in that** said baked material of said pretzel has a cylindrical shape having an outer diameter of 15 millimeters or less.

4. The pretzel as claimed in claim 3, **characterized in that** baked material of said pretzel has a cylindrical shape having an outer diameter of 10 millimeters or less.

5. The pretzel as claimed in any one of the claims 1 - 4, **characterized in that** said hollow portion of said pretzel is filled with a tasting material for providing a predetermined taste to said pretzel.

6. The pretzel as claimed in claim 5, **characterized in that** said tasting material is limited within opposite opening portions of said hollow portion of said baked material of said pretzel or opposite ends of said tasting material within said hollow portion of said pretzel have a concave shape.

7. A process for preparation of a stick type pretzel (10) comprising the steps of:
- preparing a material which consists essentially of 100 parts by weight of grain flour, 5 - 30 parts by weight of saccharides, 10 - 30 parts by weight of oils and fats and 20 - 50 parts by weight of starch,
- extruding said material by use of a ring nozzle, said extruded material (11) having a cylindrical shape with a hollow portion (12) along a longitudinal center of said stick type pretzel,
- baking said extruded material (11),
- cutting said baked material (11), and
- injecting a tasting material (13) with an adjusted viscosity into said hollow portion.

8. The process as claimed in claim 7, **characterized in that** said saccharide is in the range from 10 to 20 parts by weight, said oils and fats are in the range from 15 to 25 parts by weight and said starch is in the range from 30 to 45 parts by weight.

9. The process as claimed in any one of claims 7 - 8, **characterized in that** said ring nozzle has an outer diameter of 18 millimeters or less.

10. The process as claimed in claim 9, **characterized in that** said ring nozzle has an outer diameter within 11 millimeters.

11. The process as claimed in any one of claims 7 - 10, further comprising the step of subjecting, prior to said baking process, said extruded material to a treatment by use of alkaline liquid.

## Patentansprüche

1. Brezel (10) mit einer zylindrischen Form, die einen hohlen Teil (12) entlang der Mitte der Brezel in Längsrichtung begrenzt, **dadurch gekennzeichnet, dass** die Brezel (10) unter Verwendung einer Ringdüse durch Extrusion eines Materials (10) hergestellt wird, das im wesentlichen aus 100 Gewichtsteilen Kornmehl, 5 bis 30 Gewichtsteilen Saccharid, 10 bis 30 Gewichtsteilen Ölen und Fetten und 20 bis 50 Gewichtsteilen Stärke besteht, und das durch Backen des Materials hergestellt wurde, und dass die zylindrische Form einen Innendurchmesser von 40% oder mehr des äußeren Durchmessers hat.

2. Brezel nach Anspruch 1, **dadurch gekennzeichnet, dass** das Saccharid im Bereich von 10 bis 20 Gewichtsteilen, die Öle und Fette im Bereich von etwa 15 bis 25 Gewichtsteilen und die Stärke im Bereich von 30 bis 45 Gewichtsteilen vorliegt.

3. Brezel nach einem der Ansprüche 1 bis 2, **dadurch gekennzeichnet, dass** das gebackene Material der Brezel eine zylindrische Form mit einem Außendurchmesser von 15 mm oder weniger hat.

4. Brezel nach Anspruch 3, **dadurch gekennzeichnet, dass** das gebackene Material der Brezel eine zylindrische Form mit einem Außendurchmesser von 10 mm oder weniger hat.

5. Brezel nach einem der Ansprüche 1 bis 4, **dadurch gekennzeichnet, dass** der hohle Teile der Brezel mit einem Geschmacksstoff gefüllt ist, um der Brezel einen bestimmten Geschmack zu verleihen.

6. Brezel nach Anspruch 5, **dadurch gekennzeichnet, dass** der Geschmacksstoff sich innerhalb von gegenüberliegenden, sich öffnende Teilen des hohlen Teils des gebackenen Materials der Brezel befindet, oder dass gegenüberliegende Enden des Geschmacksstoffs innerhalb des hohlen Teils der Brezel eine konkave Form haben.

7. Verfahren zur Herstellung einer stabförmigen Brezel (10), welches folgende Schritte umfasst:
- Herstellung eines Materials, das im wesentlichen aus 100 Gewichtsteilen Getreidemehl, 5 bis 30 Gewichtsteilen Sacchariden, 10 bis 30 Gewichtsteilen Ölen und Fetten und 20 bis 50 Gewichtsteilen Stärke besteht;
- Extrudieren des Materials unter Verwendung einer Ringdüse, wobei das extrudierte Material (11) eine zylindrische Form mit einem hohlen Teil entlang der Mitte in Längsrichtung der stabförmigen Brezel hat;
- Backen des extrudierten Materials (11);
- Schneiden des gebackenen Materials (11) und
- Einspritzen eines Geschmacksstoffs (13) mit einer eingestellten Viskosität in den Hohlraum.

8. Verfahren nach Anspruch 7, **dadurch gekennzeichnet, dass** das Saccharid im Bereich von 10 bis 20 Gewichtsteilen, die Öle und Fette im Bereich von 15 bis 25 Gewichtsteilen und die Stärke im Bereich von 30 bis 45 Gewichtsteilen vorliegen.

9. Verfahren nach einem der Ansprüche 7 bis 8, **dadurch gekennzeichnet, dass** die Ringdüse einen Außendurchmesser von etwa 18 mm oder weniger hat.

10. Verfahren nach Anspruch 9, **dadurch gekennzeichnet, dass** die Ringdüse einen Außendurchmesser innerhalb von 11 mm hat.

11. Verfahren nach einem der Ansprüche 7 bis 10, wonach in einer weiteren Stufe vor dem Backprozess das extrudierte Material einer Behandlung unter Verwendung einer alkalischen Flüssigkeit unterzogen wird.

## Revendications

1. Bretzel (10) présentant une forme cylindrique définissant une partie creuse (12) le long d'un centre longitudinal dudit bretzel, **caractérisé en ce que** ledit bretzel (10) est préparé en extrudant, en utilisant un ajutage en anneau, un matériau (11) qui consiste essentiellement en 100 parties en poids de farine de céréales, 5 à 30 parties en poids de saccharide, 10 à 30 parties en poids d'huiles et de graisses et 20 à 50 parties en poids de fécule, et en cuisant ledit matériau, et **en ce que** ladite forme cylindrique a un diamètre intérieur représentant 40 % ou plus d'un diamètre extérieur.

2. Bretzel selon la revendication 1, **caractérisé en ce que** ledit saccharide est dans la plage de 10 à 20 parties en poids, lesdites huiles et graisses sont dans la plage de 15 à 25 parties en poids et ladite fécule est dans la plage de 30 à 45 parties en poids.

3. Bretzel selon l'une quelconque des revendications 1 à 2, **caractérisé en ce que** ledit matériau cuit dudit bretzel présente une forme cylindrique ayant un diamètre extérieur de 15 millimètres ou moins.

4. Bretzel selon la revendication 3, **caractérisé en ce que** le matériau cuit dudit bretzel présente une forme cylindrique ayant un diamètre extérieur de 10 millimètres ou moins.

5. Bretzel selon l'une quelconque des revendications 1 à 4, **caractérisé en ce que** ladite partie creuse dudit bretzel est remplie d'un matériau d'un certain goût pour donner un goût prédéterminé audit bretzel.

6. Bretzel selon la revendication 5, **caractérisé en ce que** ledit matériau d'un certain goût est limité dans les parties d'ouverture opposées de ladite partie creuse dudit matériau cuit dudit bretzel ou bien les extrémités opposées dudit matériau d'un certain goût dans ladite partie creuse dudit bretzel présentent une forme concave.

7. Traitement pour préparer un bretzel du type baguette (10) comprenant les étapes consistant à :
- préparer un matériau qui consiste essentiellement en 100 parties en poids de farine de céréales, 5 à 30 parties en poids de saccharide, 10 à 30 parties en poids d'huiles et de graisses et 20 à 50 parties en poids de fécule,
- extruder ledit matériau en utilisant un ajutage en anneau, ledit matériau extrudé (11) présentant une forme cylindrique avec une partie creuse (12) le long d'un centre longitudinal dudit bretzel du type baguette,
- cuire ledit matériau extrudé (11),
- couper ledit matériau cuit (11),
- injecter un matériau d'un certain goût (13) ayant une viscosité ajustée dans ladite partie creuse.

8. Traitement selon la revendication 7, **caractérisé en ce que** ledit saccharide est dans la plage de 10 à 20 parties en poids, lesdites huiles et graisses sont dans la plage de 15 à 25 parties en poids et ladite fécule est dans la plage de 30 à 45 parties en poids.

9. Traitement selon l'une quelconque des revendications 7 à 8, **caractérisé en ce que** ledit ajutage en anneau a un diamètre extérieur de 18 millimètres ou moins.

10. Traitement selon la revendication 9, **caractérisé en ce que** ledit ajutage en anneau a un diamètre extérieur inférieur à 11 millimètres.

11. Traitement selon l'une quelconque des revendications 7 à 10, comprenant, de plus, l'étape consistant à soumettre, avant ladite opération de cuisson, ledit matériau extrudé à un traitement en utilisant un liquide alcalin.
